# EUROPEAN PATENT APPLICATION

(11) **EP 4 253 906 A1**
(43) Date of publication of application: **04.10.2023**
(21) Application number: 23160748.2
(22) Date of filing: 08.03.2023
(51) Int. Cl.: G01C 15/00, G01S 17/42

(54) **SURVEYING APPARATUS, SURVEYING METHOD, AND SURVEYING PROGRAM**

(30) Priority: 31.03.2022 JP 2022059639
(71) Applicant: TOPCON CORPORATION, Tokyo 174-8580 (JP)
(72) Inventor: YANOBE, Satoshi, Tokyo, 174-8580 (JP); YOSHINO, Kenichiro, Tokyo, 174-8580 (JP); SASAKI, You, Tokyo, 174-8580 (JP)
(74) Representative: Eisenführ Speiser

(57) **Abstract**

Effects of multiple reflections in distance measurement using a laser are reduced. A surveying method for measuring a distance to a reflection point that reflects distance measuring light, based on emission and reception of the distance measuring light, includes assuming that a symbol "K" represents a natural number, excluding zero, and determining whether a beam that is received after the (K+1)th light emission is a repeatedly reflected beam of light that has been emitted before the (K+1)th light emission. The beam that is received, after the (K+1)th light emission, at a time corresponding to a period based on a time interval from light emission at or before the Kth light emission until first reception of a beam related to the light emission at or before the Kth light emission, is determined as being the repeatedly reflected beam.

## Description

### BACKGROUND OF THE INVENTION

### Technical Field

The present invention relates to a technique for distance measurement using a laser.

### Background Art

Laser scanning is employed as a surveying means at, for example, construction sites (for example, refer to Japanese Unexamined Patent Application Publication No. 2020-8406).

### SUMMARY OF THE INVENTION

Light that is reflected at a reflective prism, a wall surface having a high reflectance, or the like, can cause multiple reflections in some cases. The light that is reflected back is received by a laser scanning apparatus and is reflected by an optical system or a body thereof, and it is then reflected again at the reflective prism, the wall surface having a high reflectance, or the like, and is received again.

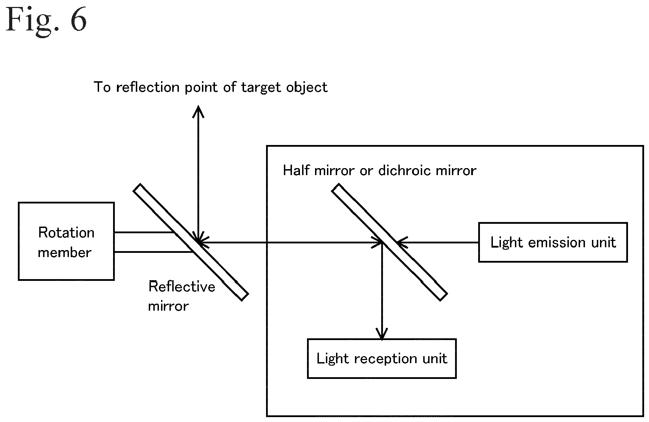

A conceptual diagram of a basic optical system of a laser scanning apparatus is shown in Fig. 6. A light emission unit emits pulses of scanning light (distance measuring light), and the scanning light is transmitted through an incident light reflection-and-separation optical system, such as a half mirror or a dichroic mirror. The scanning light then hits a reflective mirror that is rotating and is reflected thereat to be emitted to the outside. The scanning light is reflected back from a reflection point and is then reflected by the reflective mirror that is rotating, and it is further reflected at the incident light reflection-and-separation optical system to be received by a light reception unit.

In this situation, the scanning light that is reflected back from the reflection point is partially transmitted through the incident light reflection-and-separation optical system and enters the light emission unit as well as the light reception unit. These beams of incident light entering the light emission unit and incident light entering the light reception unit are reflected at respective optical systems thereof (e.g., lenses or optically transparent protective layers), and they return along the paths and are reflected at the reflection mirror to be emitted in the direction of the reflection point. This can cause multiple reflections, as described above. In some cases, scanning light expands in beam diameter while propagating over a long distance, and the beam of light that is reflected back may be reflected at the body of the laser scanning apparatus to again travel in the direction of the reflection point, resulting in occurrence of multiple reflections, as described above.

A repeatedly reflected beam may become noise. Specifically, laser scanning involves repeated measurements using pulses of light. If a repeatedly reflected beam related to the Kth light emission is received as a reflected beam related to the (K+1)th light emission, this determination is incorrect, and measurement using this scanning light results in error.

This is because the received beam is a repeatedly reflected beam of scanning light that has been emitted at the Kth time, and a reflected beam of scanning light that has been emitted at the (K+1)th time, should be received in this case. Depending on the situation, reflection may occur three times, four times, or even more. This problem can occur also in a case of repeatedly emitting distance measuring light to the same point by using a total station or the like.

In view of these circumstances, an object of the present invention is to provide a technique for reducing effects of multiple reflections in distance measurement using a laser.

The present invention provides a surveying apparatus configured to measure a distance to a reflection point that reflects distance measuring light, based on emission and reception of the distance measuring light. The surveying apparatus includes a processor or circuitry configured to assume that a symbol "K" represents a natural number, excluding zero, and to determine whether a beam that is received after the (K+1)th light emission is a repeatedly reflected beam of light that has beenis emitted before the (K+1)th light emission. The beam that is received, after the (K+1)th light emission, at a time corresponding to a period based on a time interval from light emission at or before the Kth light emission until first reception of a beam related to the light emission at or before the Kth light emission, is determined as being the repeatedly reflected beam.

In one aspect of the present invention, a beam that is received, after the repeatedly reflected beam is received, at a time not corresponding to the period, may be used as a reflected beam of the (K+1)th light emission. In another aspect of the present invention, in a case in which another beam is received, after the repeatedly reflected beam is received, at a time corresponding to the period, and an estimated intensity of the repeatedly reflected beam at the time of receiving the another beam is not more than a predetermined threshold, the another beam may be used as a reflected beam of the (K+1)th light emission.

The present invention also provides a surveying method for measuring a distance to a reflection point that reflects distance measuring light, based on emission and reception of the distance measuring light. The surveying method includes assuming that a symbol "K" represents a natural number, excluding zero, and determining whether a beam that is received after the (K+1)th light emission is a repeatedly reflected beam of light that has been emitted before the (K+1)th light emission. The beam that is received, after the (K+1)th light emission, at a time corresponding to a period based on a time interval from light emission at or before the Kth light emission until first reception of a beam related to the light emission at or before the Kth light emission, is determined as being a repeatedly reflected beam.

The present invention also provides a non-transitory computer recording medium storing computer executable instructions for making a computer processor execute a surveying program to cause measuring of a distance to a reflection point that reflects distance measuring light, based on emission and reception of the distance measuring light. The computer executable instructions are made to, when executed by the computer processor, cause the computer processor to assume that a symbol "K" represents a natural number, excluding zero, and to determine whether a beam that is received after the (K+1)th light emission is a repeatedly reflected beam of light that has been emitted before the (K+1)th light emission. The beam that is received, after the (K+1)th light emission, at a time corresponding to a period based on a time interval from light emission at or before the Kth light emission until first reception of a beam related to the light emission at or before the Kth light emission, is determined as being the repeatedly reflected beam.

The present invention enables reducing effects of multiple reflections in distance measurement using a laser.

### BRIEF DESCRIPTION OF DRAWINGS

Fig. 1 shows a situation of laser scanning.
Fig. 2 shows an external appearance of a laser scanning apparatus.
Fig. 3 is a block diagram of the laser scanning apparatus.
Fig. 4 shows a principle of processing.
Fig. 5 is a flowchart showing an example of a processing procedure.
Fig. 6 is a conceptual diagram of a basic optical system of a laser scanning apparatus.

### PREFERRED EMBODIMENTS OF THE INVENTION

### 1. First Embodiment

### Overview

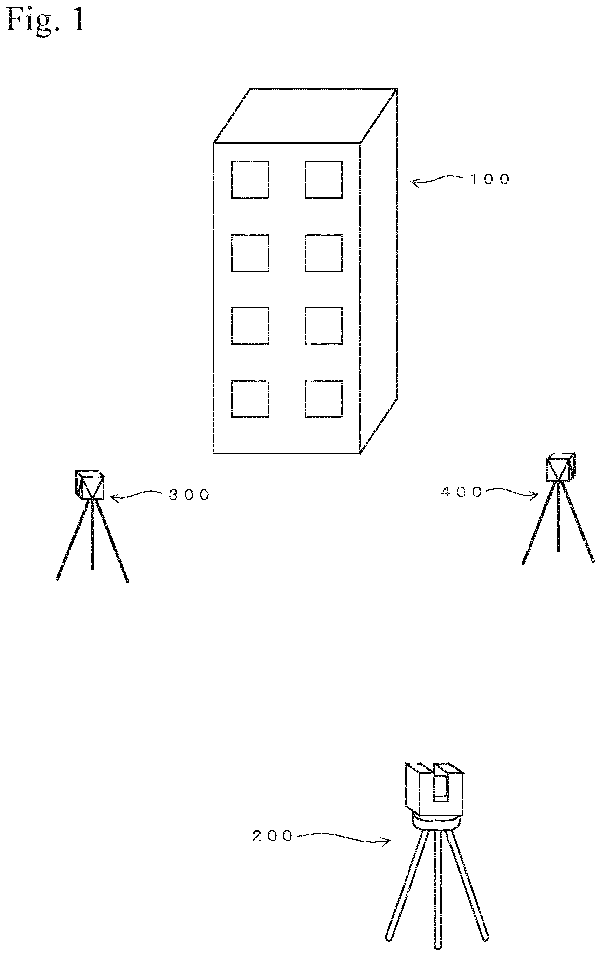

Fig. 1 shows a situation in which a laser scanning apparatus 200 as a surveying apparatus is set up at a site at which point cloud data is to be obtained. Fig. 1 illustrates a building 100 and reflective prisms 300 and 400 as examples of targets from which pieces of point cloud data are to be obtained. The reflective prisms 300 and 400 are set up at points at which positions are already known and are used for calculating a position and an attitude of the laser scanning apparatus 200 by a method of resection.

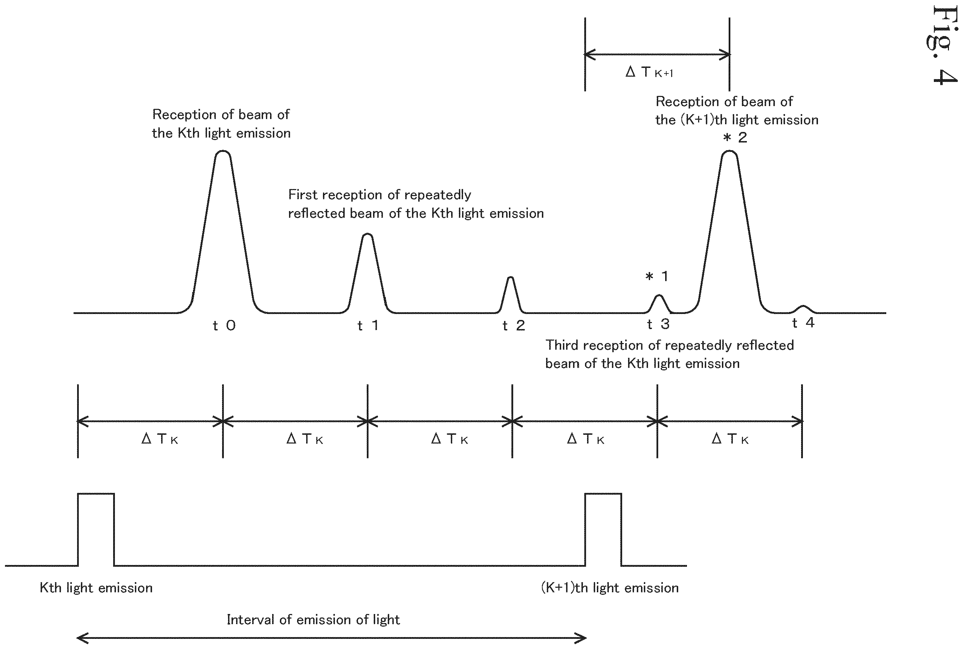

The following describes a principle of a technique for reducing effects of multiple reflections of scanning light. Fig. 4 shows a case in which multiple reflections of light that has been emitted at the Kth time, occurs. Herein, multiple reflections are assumed to be repeated reflection that occurs as follows: light is reflected at a reflection point having a high reflectance, such as a reflective prism or a mirror surface, and the reflected light is received by a laser scanning apparatus while being partially reflected by an optical system or the like thereof to advance to the reflection point again. Then, the light is reflected at the reflection point again and is received by the laser scanning apparatus while being partially reflected thereby. It is noted that the symbol "K" represents a natural number, excluding zero (K = 1, 2, 3, 4, ...).

In this situation, a beam corresponding to the Kth light emission is received first at a time t0. This received beam is not of a multiple reflection, but is a beam that is reflected back first (regular reflected beam). In this case, a round-trip time to the reflection point (scanned point) of this beam of scanning light is assumed as ΔTK. A beam that is repeatedly reflected due to multiple reflections is received at an interval of ΔTK and is gradually reduced in intensity each time reflection is repeated. Fig. 4 shows the times when light that has been reflected multiple times is received, which are times t1, t2, t3, and t4, being periodic with an interval of ΔTK on the time axis. Until a time when light having a recognizable level of intensity is repeatedly reflected back due to multiple reflections cannot be generalized because it depends on a distance to a reflection point, a reflectance of a reflection point, intensity of emitted light, sensitivity to received light, effects of moisture and dust present on the path to a reflection point (related to attenuating and scattering of distance measuring light), etc.

In the case in Fig. 4, a regular reflected beam (which is not of a multiple reflection) corresponding to the (K+1)th light emission is received at a timing *2. However, in the state in which light that has been emitted at the Kth time is repeatedly reflected due to multiple reflections, a repeatedly reflected beam is received at a timing *1 (time t3), which is after the (K+1)th light emission but before the timing *2. This beam is incorrectly received as a reflected beam corresponding to the (K+1)th light emission.

The beam that is received at the timing *1 is actually a reflected beam (repeatedly reflected beam) related to the Kth light emission, and therefore, if this beam is used as a beam related to the (K+1)th light emission, there is error in measurement. More specifically, a distance is calculated based on a combination of the time of the (K+1)th light emission and the reception time at the timing *1, although this should be a combination of the time of the (K+1)th light emission and the reception time at the timing *2. This calculation is not based on the principle of electro-optical distance measurement and provides an incorrect distance.

In one example, assuming that a distance to a scanned point (point that reflects distance measuring light) is 100 meters, a time necessary for scanning light to go and return is (round-trip distance)/(speed of light) = (100 × 2)/3 × 108 ≈ 0.67 µs. That is, a reflected beam is received in approximately 0.67 µs after light emission. For the Kth light emission, ΔTK = 0.67 µs.

On the other hand, assuming that an interval of emission of scanning light is approximately 1.8 µs (556 kHz), the (K+1)th light emission is performed in approximately 1.8 µs after the Kth light emission is performed. For multiple reflections of scanning light that has been emitted at the Kth time, a repeatedly reflected beam is received in 0.67 µs (at the time t1), 1.34 µs (at the time t2), 2.01 µs (at the time t3), ..., after a regular reflected beam of the Kth light emission is received (at the time t0). In this case, the time when a repeatedly reflected beam is received in 2.01 µs (at the time t3) after the repeatedly reflected beam of the Kth light emission is received, corresponds to the timing *1.

Herein, a regular reflected beam corresponding to the (K+1)th light emission is received at the timing *2. However, a laser scanning apparatus using a conventional technique is not able to determine whether a reflected beam received at the timing *1 is a regular reflected beam, and thus, the reflected beam that is received at the timing *1 or the time t3 is used in arithmetic calculation for measuring a position of a scanned point. This causes error and generates noise.

In order to cope with this problem, the following processing is performed in this embodiment. First, a round-trip time ΔTK of measurement light (scanning light) of the Kth light emission is obtained, and a reflected beam that is received at a timing of an integral multiple of the round-trip time ΔTK is estimated as a repeatedly reflected beam. The received beam that is estimated as a repeatedly reflected beam is not used, or a measured distance value based on the received beam that is estimated as a repeatedly reflected beam is not used.

In the case in Fig. 4, the beam that is received at the timing *1 is not used, or a measured distance value based on this beam is not used. This measure avoids incorrect measurement due to reception of a repeatedly reflected beam.

In some cases, it is determined that a regular reflected beam related to the (K+1)th light emission, and a repeatedly reflected beam related to the Kth light emission, overlap each other, and this repeatedly reflected beam is light having such a high intensity as to adversely affect distance measurement. In this situation, effects of the repeatedly reflected beam are determined as not being negligible, and this overlapping reflected beam is not used as a regular reflected beam related to the (K+1)th light emission. This results in invalid distance measurement. In another case, it is determined that a regular reflected beam related to the (K+1)th light emission and a repeatedly reflected beam related to the Kth light emission overlap each other, but this repeatedly reflected beam is light not having such a high intensity as to adversely affect distance measurement. In this situation, effects of the repeatedly reflected beam are determined as being negligible, and this overlapping reflected beam is used as a regular reflected beam related to the (K+1)th light emission.

### Structure of Hardware

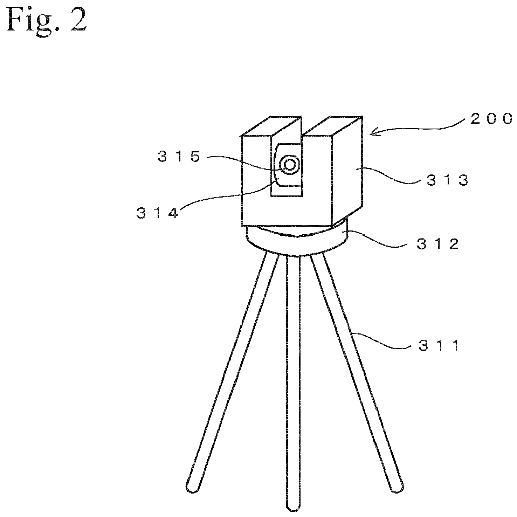

Fig. 2 shows an external appearance of the laser scanning apparatus (laser scanner) 200. The laser scanning apparatus 200 includes a tripod 311, a base 312 that is fixed on top of the tripod 311, a horizontal rotation unit 313 that is a rotary body being horizontally rotatable on the base 312, and a vertical rotation unit 314 that is a rotary body being vertically rotatable relative to the horizontal rotation unit 313. In addition, a control panel (not shown) is disposed on a back surface of the horizontal rotation unit 313.

The vertical rotation unit 314 includes an optical unit 315 that emits and receives laser scanning light. The optical unit 315 emits pulses of laser scanning light. The emission of pulses of laser scanning light is performed along a direction (vertical plane) orthogonal to a rotation axis (axis extending in the horizontal direction) of the vertical rotation unit 314 while the vertical rotation unit 314 rotates. That is, the optical unit 315 emits pulses of laser scanning light along a vertical angle direction (direction of an elevation angle and a depression angle).

Laser scanning is performed on the surrounding area as follows: pulses of laser scanning light are emitted from the optical unit 315 while the horizontal rotation unit 313 is rotated horizontally and the vertical rotation unit 314 is rotated vertically, and the laser scanning light that is reflected back from a target object is received by the optical unit 315.

The horizontal rotation unit 313 is rotated horizontally while scanning along the vertical angle direction (upper-lower scanning) is performed, whereby a scanning line along the vertical angle direction (upper-lower scanning line) moves in such a manner as to slide along the horizontal angle (horizontal) direction.

Performing the horizontal rotation at the same time as the vertical rotation causes the scanning line along the vertical angle direction (upper-lower scanning line) to not be perfectly along the vertical direction and be slightly slanted. Under the condition in which the horizontal rotation unit 313 is not rotated, scanning along the vertical angle direction (upper-lower scanning) is performed along the vertical direction.

Rotation of each of the horizontal rotation unit 313 and the vertical rotation unit 314 is performed by a motor. Each of a horizontal rotation angle of the horizontal rotation unit 313 and a vertical rotation angle of the vertical rotation unit 314 is accurately measured by an encoder.

Each laser scanning light is one pulse of distance measuring light. One pulse of the laser scanning light is emitted to a scanning target point that reflects it, and a distance of this point is thereby measured. On the basis of this measured distance value and the direction of emission of the laser scanning light, the position of the scanned point (point that reflects the laser scanning light) is calculated relative to the laser scanning apparatus 200.

In one case, the laser scanning apparatus 200 outputs a laser-scanned point cloud by providing data of a distance and a direction related to each point (each scanned point). In another case, the laser scanning apparatus 200 internally calculates a position of each point in a certain coordinate system, and a three-dimensional coordinate position of each point is output as point cloud data. Data of the laser-scanned point cloud also contains information of luminance of each scanned point (intensity of light that is reflected back from each scanned point).

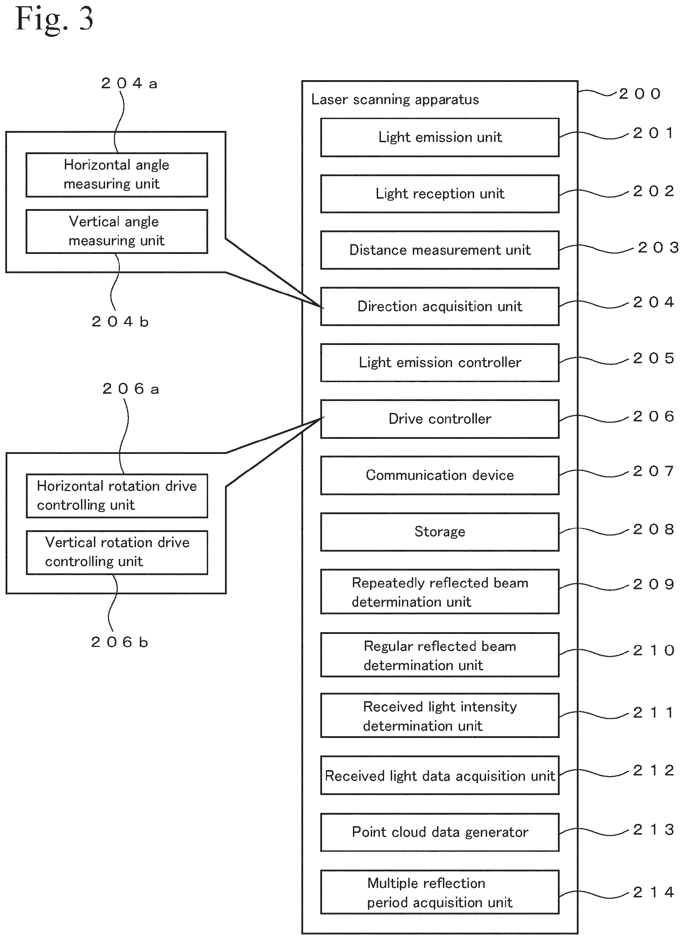

Fig. 3 is a block diagram of the laser scanning apparatus 200. The laser scanning apparatus 200 includes a light emission unit 201, a light reception unit 202, a distance measurement unit 203, a direction acquisition unit 204, a light emission controller 205, a drive controller 206, a communication device 207, a storage 208, a repeatedly reflected beam determination unit 209, a regular reflected beam determination unit 210, a received light intensity determination unit 211, a received light data acquisition unit 212, a point cloud data generator 213, and a multiple reflection period acquisition unit 214.

The laser scanning apparatus 200 includes a built-in computer that performs arithmetic calculations related to measurement of a position of each scanned point. This computer implements functions of the storage 208, the repeatedly reflected beam determination unit 209, the regular reflected beam determination unit 210, the received light intensity determination unit 211, the received light data acquisition unit 212, the point cloud data generator 213, and the multiple reflection period acquisition unit 214. It is also possible to prepare an external apparatus as this computer.

The light emission unit 201 includes a light emitting element that emits laser scanning light and also includes an optical system and peripheral circuits related to emission of light. The repetition frequency of emission of light is, for example, 200 kHz to 2 MHz. This frequency is selected in consideration of cost, desired density of point cloud, distance to be measured, and so on. The light reception unit 202 includes a light receiving element that receives laser scanning light and also includes an optical system and peripheral circuits related to reception of light.

The distance measurement unit 203 calculates a distance from the laser scanning apparatus 200 to a reflection point that reflects laser scanning light (scanned point), based on output of the light reception unit 202. The laser scanning light is received after a certain time, which depends on a distance to the reflection point, has passed from the time of light emission. This certain time is used to calculate a distance of the reflection point.

The direction acquisition unit 204 acquires a direction of the optical axis of laser scanning light. The direction of the optical axis is obtained by measuring an angle (horizontal angle) of the optical axis in the horizontal direction and an angle (elevation angle or depression angle) of the optical axis in the vertical direction. The direction acquisition unit 204 has a horizontal angle measuring unit 204a and a vertical angle measuring unit 204b.

The horizontal angle measuring unit 204a measures a horizontal rotation angle of the horizontal rotation unit 313. The horizontal rotation is rotation around the vertical direction. This angle is measured by an encoder. The vertical angle measuring unit 204b measures a vertical rotation angle (elevation angle or depression angle) of the vertical rotation unit 314. The vertical rotation is rotation around the horizontal direction. This angle is measured by an encoder.

Measuring a horizontal rotation angle of the horizontal rotation unit 313 and a vertical rotation angle of the vertical rotation unit 314 provides a direction of the optical axis of laser scanning light, that is, a direction of a laser-scanned point, as seen from the laser scanning apparatus 200.

The light emission controller 205 controls timing of emission of laser scanning light of the light emission unit 201. The drive controller 206 includes a horizontal rotation drive controlling unit 206a for controlling driving to make the horizontal rotation unit 313 rotate horizontally and a vertical rotation drive controlling unit 206b for controlling driving to make the vertical rotation unit 314 rotate vertically. The driving is performed by motors.

The communication device 207 communicates with other devices. The communication is performed by wired communication or by using a wireless local area network (WLAN), a mobile phone network, or the like. The storage 208 is composed of a semiconductor memory or a hard disk drive and stores an operation program and data that are necessary to operate the laser scanning apparatus 200 and data that are obtained during processing and as a result of operation.

The repeatedly reflected beam determination unit 209 determines whether a repeatedly reflected beam is received. Specifically, it is determined whether a beam is received at a timing immediately after light emission and also at a timing of an integer multiple of a time measured from the preceding light emission to first light reception related to the preceding light emission (a round-trip time to a reflection point of distance measuring light).

In the case in Fig. 4, for the (K+1)th light emission, it is determined whether the timing of receiving a beam for the first time after the (K+1)th light emission coincides with one of multiple times t1, t2, t3, and ... , with an interval of ΔTK, starting from emission of the preceding light (the Kth light emission).

The coincidence is determined by allowing some margins. For example, the coincidence is determined in a range of plus and minus 5 % of ΔTK.

In the case in which coincidence is determined, the received beam is determined as being a repeatedly reflected beam of the Kth light emission. In the case in Fig. 4, the beam is received at the time t3, which is a timing after the (K+1)th light emission and is at the interval of ΔTK that is a period starting from emission of the preceding light (the Kth light emission). Thus, the determination results in YES (that is, the beam is determined as being a repeatedly reflected beam). This process is performed by the repeatedly reflected beam determination unit 209.

The regular reflected beam determination unit 210 determines whether a regular reflected beam, which is not a repeatedly reflected beam, is received, after it is determined that the repeatedly reflected beam is received. After the repeatedly reflected beam is received, a regular reflected beam (reflected beam that is not a repeatedly reflected beam) is received. In the case in Fig. 4, after the repeatedly reflected beam is received at the time t3, a regular reflected beam of the (K+1)th light emission is received at the timing *2. In response to this, the regular reflected beam determination unit 210 determines whether the beam received at the timing *2 is a regular reflected beam.

Basically, a reflected beam that comes first after the reception of the repeatedly reflected beam (next reflected beam) is determined as being a regular reflected beam related to the (K+1)th light emission. In case in which this next reflected beam comes at the period of the repeatedly reflected beam, it is determined whether to use this next reflected beam as a regular reflected beam in a determination of intensity of received light, which is described later.

The received light intensity determination unit 211 evaluates the intensity of the received light. For example, even if a reflected beam of the (K+1)th light emission and a repeatedly reflected beam of the Kth light emission overlap each other (this phenomenon very rarely occurs), measurement of a position of a scanned point is not affected in the condition in which the intensity of the repeatedly reflected beam is not so high as to affect distance measurement. From this point of view, in this situation, the intensity of the received repeatedly reflected beam is evaluated to determine whether the intensity thereof is of such a degree that does not affect measurement of a position of a scanned point, or to determine whether the intensity thereof is of such a degree that affects the measurement. This determination is performed by the received light intensity determination unit 211.

In case in which a reflected beam of the (K+1)th light emission and a repeatedly reflected beam of the Kth light emission overlap each other, it is difficult to directly extract and evaluate only the intensity of the repeatedly reflected beam of the Kth light emission. For this reason, the intensity of the repeatedly reflected beam of the Kth light emission is estimated based on an attenuation factor and a number of times of reflection of the repeatedly reflected beam of the Kth light emission. A repeatedly reflected beam reduces in intensity as the number of times of reflection increases in this manner: first reflection, second reflection, .... This tendency is measured (or obtained) in advance, and the intensity of a repeatedly reflected beam overlapping a regular reflected beam is estimated based on this tendency. The estimated value is used in the determination described above.

The received light data acquisition unit 212 uses data of a regular reflected beam or data of a received beam that can be used as a regular reflected beam without any problems, as received light data for distance measurement. The received light data can contain a time (timing) of receiving a beam and an intensity of the received beam.

The point cloud data generator 213 generates position data of a scanned point, based on the received light data acquired by the received light data acquisition unit 212. The position data of a scanned point contains a measured distance value and a direction as seen from an optical origin of the laser scanning apparatus 200, of a target reflection point (scanned point). Laser scanning provides point cloud data that contains position data of the scanned points and a value of intensity of the reflected beam (intensity of the received beam) related to each scanned point.

The multiple reflection period acquisition unit 214 acquires a period of timing to receive a repeatedly reflected beam. In the case in Fig. 4, the multiple reflection period acquisition unit 214 obtains ΔTK and ΔTK+1. In more detail, an interval from the time of light emission to the time of receiving a regular reflected beam of this light emission is acquired as a period of multiple reflections. In the case in Fig. 4, an interval from the start time of light emission to the time of a peak of a received regular reflected beam (which is not a repeatedly reflected beam) is acquired as the period of multiple reflections (ΔTK and ΔTK+1).

### Example of Processing

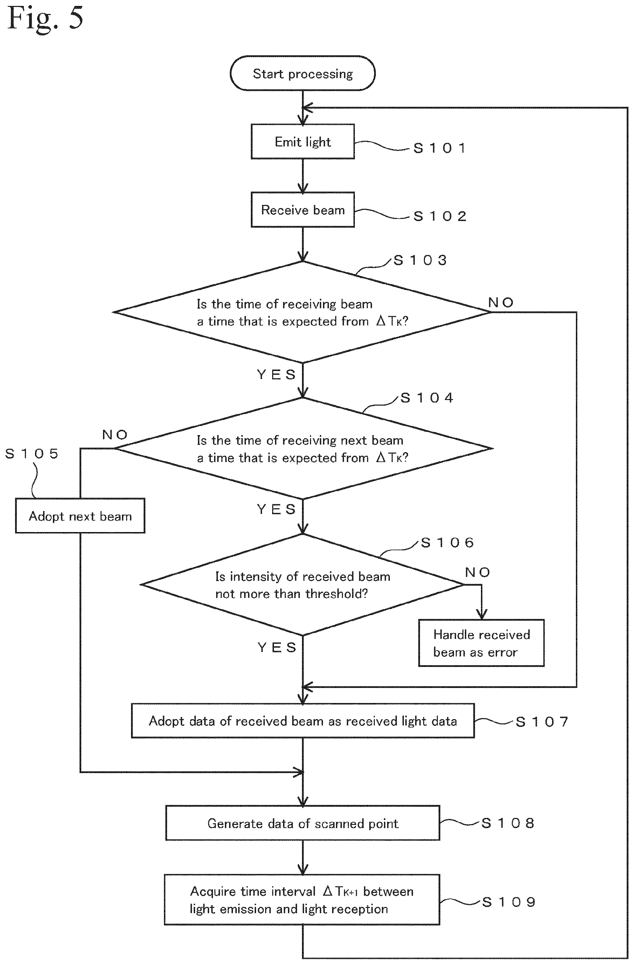

Fig. 5 shows an example of a processing procedure. The program for executing the processing in Fig. 5 is stored in the storage of the built-in computer of the laser scanning apparatus 200 and is read and executed by the CPU of the computer. It is also possible to store this program in an appropriate storage medium and to read this program therefrom for use.

The processing described below can be performed (1) each time distance measuring light is emitted, (2) in post-processing after scanning data is obtained, or (3) in parallel to laser scanning with some delay, although not being performed simultaneously.

Details of the processing will be described with reference to Fig. 4 as an example. In this example, the (K+1)th light emission of distance measuring light is performed (step S101). The symbol "K" represents a natural number, excluding zero (K = 1, 2, 3, 4, ...). Then, a reflected beam of the (K+1)th light emission and a repeatedly reflected beam of the Kth light emission (the preceding light emission) are received (step S102). Actually, a repeatedly reflected beam of the Kth light emission is rarely received (herein, this rare case is described as an example), and a repeatedly reflected beam is not generated in most cases.

In case of multiple reflections, beams are received multiple times in step S102. Unless multiple reflections occur, a beam is received once in step S102.

Then, it is determined whether a timing of receiving the beam in step S102 coincides with a most recently acquired interval ΔT from emission of measurement light (scanning light) to reception of a regular reflected beam (step S103). Herein, ΔTK that is related to the Kth light emission is used as the interval ΔT. In the condition in which the interval ΔT is not obtained, the process in step S103 is not performed, and instead, received light data is acquired, and the processing advances from step S102 to step S107. The process in step S103 is performed by the repeatedly reflected beam determination unit 209.

In the case in which the timing of receiving the beam in step S102 does not coincide with the interval ΔTK, the processing advances from step S103 to step S107.

In the case in which the timing of receiving the beam in step S102 coincides with the interval ΔTK, the processing advances to step S103 to step S104. In step S104, it is determined whether a timing of receiving a beam next after the reception of the beam in step S102 coincides with the interval ΔTK. This process is performed by the regular reflected beam determination unit 210.

If the timing of receiving the beam next does not coincide with the interval ΔTK, this received beam is determined as being a regular reflected beam of light emitted in step S101, and data of this received beam is adopted (step S105).

In the case in Fig. 4, the (K+1)th light emission is performed in step S101, and subsequently, a beam is received at the timing *1 (step S102). In this situation, the timing *1 of receiving the beam coincides with the interval ΔTK based on the Kth light emission, and therefore, the processing advances from step S103 to step S104.

Then, a beam (next beam) is received first after the time t3, at the timing *2, which does not coincide with the interval ΔTK, and thus, the beam that is received at the timing *2 is presumed to be a regular reflected beam of the (K+1)th light emission, whereby data of the received beam is adopted as received light data (step S105).

Returning to Fig. 5, in response to a determination resulting in YES in step S104, the processing advances to step S106. In step S106, it is determined whether the intensity of the repeatedly reflected beam received in step S102 exceeds a predetermined threshold. This process is performed by the received light intensity determination unit 211. The threshold used herein is set at an intensity of incident light that can saturate the light receiving element and cause a reduction in accuracy of distance measurement.

For the received repeatedly reflected beam in which the determination results in YES in step S104, in the case in which the intensity thereof does not exceed the predetermined threshold, data of this received beam is adopted as received light data (step S107).

For example, in the condition in which the timings *1 and *2 in Fig. 4 overlap each other, unless the intensity of the beam received at the timing *1 is high, this beam does not adversely affect distance measurement using the timing *2 of receiving the beam. Thus, in the condition in which the determination results in YES in step S106 even when the timings *1 and *2 in Fig. 4 overlap each other, data of the determination target received beam is adopted as data of the regular reflected beam corresponding to the (K+1)th light emission (step S107).

In step S106, for the received repeatedly reflected beam having an intensity exceeding the predetermined threshold, it is determined that high accuracy of distance measurement is not ensured, and this beam is handled as an error. Under these conditions, point cloud data of points (scanned points) corresponding to light emission in step S101 is not generated.

After step S105 or S107, position data of a scanned point is generated based on the received light data adopted in step S105 or the received light data adopted in step S107 (step S108). This process is performed by the point cloud data generator 213.

Next, a time interval ΔT from light emission to light reception is acquired (step S109). For example, the case in Fig. 4 assumes that the (K+1)th light emission is performed in step S101, and thus, the target light emission herein is the (K+1)th light emission. In this situation, a time interval ΔTK+1 from the (K+1)th light emission to reception of a regular reflected beam is acquired. This process is performed by the multiple reflection period acquisition unit 214. The time interval ΔTK+1 is used in the processing related to next light emission (the (K+2)th light emission).

As a result, measurement processing related to points (reflection points) in which effects of repeatedly reflected beams are removed, is performed. This processing is repeated so as to be performed with respect to each light emission.

### Advantageous Effects

In the condition in which a distance to a distance measurement target is long, and an interval of repeatedly emitting distance measuring light is short, the effects of multiple reflections described with reference to Fig. 4 are large and conspicuous. Fig. 4 shows an example of being affected by a beam that is reflected four times. If the time interval ΔTK is close to the interval of light emission, a beam that is reflected three times or fewer with reference to the Kth light emission can affect the processing for the (K+1)th light emission. The processing described above can reduce the effects of multiple reflections in such a situation.

There may be cases in which an unknown reflective prism is placed, for example, several hundreds of meters ahead, at a surveying site, and reflection unintentionally occurs thereat. In another case, unintentional intense reflection, such as reflection at a rear-view mirror of a construction vehicle, may occur. The processing described above can reduce the effects of multiple reflections in such cases.

### 2. Second Embodiment

A path of multiple reflections may be complicated in some cases. Examples of a path of multiple reflections are as follows. One example is a path in which light repeatedly travels and returns in such a manner that light emitted from a laser scanning apparatus is reflected at a distance measurement target, is then reflected at a mirror surface or other high reflectance body, which is close to or behind the laser scanning apparatus, and is further reflected at a reflection point on the distance measurement target to travel to the high reflectance body again. Another example is a path in which light repeatedly travels and returns in such a manner that light emitted from a laser scanning apparatus is reflected at a distance measurement target, is then reflected at another reflection surface to be received and is reflected by the laser scanning apparatus, and travels to the distance measurement target.

For these paths, a period of multiple reflections is longer than an interval from light emission to reception of a regular reflected beam. This is because a path of a multiple reflection, repeatedly reflected beam is longer than a path of a regular reflected beam.

The following describes an example of coping with such multiple reflections. In this case, assuming that an interval of light emission is T0, it is determined whether a beam having an intensity that gradually decreases each time is periodically received at a period shorter than the interval T0. In the case of receiving such a beam, this beam is presumed to be a repeatedly reflected beam, and a period of this beam is obtained. Other processes are the same as those in the first embodiment.

In this case, a period ΔT' of multiple reflections is a coefficient times an interval ΔT from light emission to reception of a regular reflected beam. The coefficient is a number greater than one.

In this method, assuming that an interval of light emission is T0, it is determined whether a beam having an intensity that gradually decreases each time is periodically received at a period shorter than the interval T0. Then, in the case of receiving such a beam, this beam is presumed to be a repeatedly reflected beam, and a period of this beam is obtained. This method can also be used for multiple reflections that are described in the first embodiment.

### 3. Third Embodiment

A period of multiple reflections may be calculated each two times, each three times, or each of a multiple of times, of emission of distance measuring light, instead of each time of emission of distance measuring light. It is also possible to calculate a period of multiple reflections each time a measured distance value varies greatly, at the time the intensity of a received beam exceeds a predetermined threshold, or at the time the intensity of a received beam varies greatly.

For example, the processing related to the (K+1)th light emission in Fig. 4 may use a period of a repeatedly reflected beam that is obtained with reference to the (K-1)th light emission. In this case, the processing is performed by presuming that the period of the repeatedly reflected beam of the Kth light mission is the same as that of the (K-1)th light emission. This method can be used in a case in which the processing is slow, although an interval of light emission is short.

### 4. Fourth Embodiment

The processing similar to that described in Fig. 5 can be performed in post-processing after a necessary amount of point cloud data is obtained, or in parallel to laser scanning with some delay although being not performed simultaneously. For example, laser scanning is performed a necessary number of times to obtain data of a time and a direction of light emission, a time of light reception, and an intensity of a received beam, with respect to each scanned point. Then, the processes in step S103 and subsequent steps are performed with reference to each light emission and each light reception in post-processing.

### 5. Other Matters

One or more of the repeatedly reflected beam determination unit 209, the regular reflected beam determination unit 210, the received light intensity determination unit 211, the received light data acquisition unit 212, the point cloud data generator 213, and the multiple reflection period acquisition unit 214 may be prepared as an external device. In addition, one or more of functions of these functional units may be performed by a personal computer (PC) or a processing server. In these cases, the device is used as a surveying device that processes laser scanning data.

Although the embodiments are described by referring to laser scanning as an example, in order to increase distance measurement accuracy, measurement may be performed multiple times on one point by using laser of a total station or the like in distance measurement. The present invention can also be used in this case.

## Claims

1. A surveying apparatus configured to measure a distance to a reflection point that reflects distance measuring light, based on emission and reception of the distance measuring light,
the surveying apparatus comprising a processor or circuitry configured to:
assume that a symbol "K" represents a natural number, excluding zero; and
determine whether a beam that is received after (K+1)th light emission is a repeatedly reflected beam of light that has been emitted before the (K+1)th light emission,
wherein the beam that is received, after the (K+1)th light emission, at a time corresponding to a period based on a time interval from light emission at or before Kth light emission until first reception of a beam related to the light emission at or before the Kth light emission, is determined as being the repeatedly reflected beam.

2. The surveying apparatus according to claim 1, wherein a beam that is received, after the repeatedly reflected beam is received, at a time not corresponding to the period, is used as a reflected beam of the (K+1)th light emission.

3. The surveying apparatus according to claim 1, wherein, in a case in which another beam is received, after the repeatedly reflected beam is received, at a time corresponding to the period, and an estimated intensity of the repeatedly reflected beam at the time of receiving the another beam is not more than a predetermined threshold, the another beam is used as a reflected beam of the (K+1)th light emission.

4. A surveying method for measuring a distance to a reflection point that reflects distance measuring light, based on emission and reception of the distance measuring light,
the surveying method comprising:
assuming that a symbol "K" represents a natural number, excluding zero; and
determining whether a beam that is received after (K+1)th light emission is a repeatedly reflected beam of light that has been emitted before the (K+1)th light emission,
wherein the beam that is received, after the (K+1)th light emission, at a time corresponding to a period based on a time interval from light emission at or before Kth light emission until first reception of a beam related to the light emission at or before the Kth light emission, is determined as being the repeatedly reflected beam.

5. A non-transitory computer recording medium storing computer executable instructions for making a computer processor execute a surveying program to cause measuring a distance to a reflection point that reflects distance measuring light, based on emission and reception of the distance measuring light,
the computer executable instructions made to, when executed by the computer processor, cause the computer processor to:
assume that a symbol "K" represents a natural number, excluding zero; and
determine whether a beam that is received after (K+1)th light emission is a repeatedly reflected beam of light that has been emitted before the (K+1)th light emission,
wherein the beam that is received, after the (K+1)th light emission, at a time corresponding to a period based on a time interval from light emission at or before Kth light emission until first reception of a beam related to the light emission at or before the Kth light emission, is determined as being the repeatedly reflected beam.
